# EUROPEAN PATENT APPLICATION

(11) **EP 1 575 224 A1**
(43) Date of publication of application: **14.09.2005**
(21) Application number: 05004101.1
(22) Date of filing: 25.02.2005
(51) Int. Cl.: H04L 12/56

(54) **Packet output-controlling device**

(30) Priority: 09.03.2004 JP 2004065380
(71) Applicant: MATSUSHITA ELECTRIC INDUSTRIAL CO., LTD., Osaka 571-8501 (JP)
(72) Inventor: Shimazu, Mikio, Kasuya-Gun, Fukuoka-Ken, 811-2311 (JP); Kubo, Seiji, Kasuya-Gun, Fukuoka-Ken, 811-2311 (JP); Mutuoka, Makoto, Kasuya-Gun, Fukuoka-Ken, 811-2205 (JP); Kishimoto, Michinori, Kaho-Gun, Fujuoka-Ken, 820-0088 (JP)
(74) Representative: Pautex Schneider, Nicole Véronique

(57) **Abstract**

A packet shaper (24) includes: a TCP packet queue (245) for storing TCP packets; a UDP packet queue (246) for storing UDP packets; a scheduler (247) for outputting a packet from one of the queues (245),(246) into a rate-setting control unit (244). Control based on a total queue length is performed to deterioration of image quality or tone quality in the audio/visual communications according to a connection-oriented protocol like TCP.

## Description

The present invention relates to a packet output-controlling device (e.g. a packet shaper, a scheduler, and so on.) used for packet transmission guaranteeing QoS (Quality of Service) and a packet transmission apparatus including the same.

A packet shaper is a device that inputs a packet from an input portion thereof, and outputs a packet from an output portion thereof. A transmitting rate of the input portion is greater than a transmitting rate of the output portion. Therefore, a packet inputted into the packet shaper from the input portion is not always outputted from the output portion. In some cases, the packet shaper may discard one or more packets.

Normally, each packet carries a part of various kinds of data. For example, when character data of a home page of a Website is being browsed or a file on a server is being downloaded according to ftp, there is little actual harm even if discard of packets occurs.

However, audio/visual packets used for AV (Audio/Visual) communications should be transmitted in real time. It is not preferable that the audio/visual packets are discarded and a predetermined transmitting rate cannot be ensured, because image quality and tone quality is deteriorated.

Therefore, the packet output-controlling device (e.g. a packet shaper) needs to implement a function for preventing the audio/visual packets from being discarded. It is seemed that a connectionless protocol (e.g. UDP) is suitable as a protocol for the audio/visual communications. However, usage of a connection-oriented protocol (e.g. TCP) has been recently considered.

TCP supports congestion-controlling functions. To be more specific, Ack packets for transmitted data are supervised in communications according to TCP.

When an expected Ack packet does not arrive at all, or when it takes a long time for the expected Ack packet to arrive, it is judged that congestion has been occurred, the congestion-controlling functions in a transmitter of packets automatically suppresses a transmitting rate of the packets.

A conventional packet output-controlling device cannot concern this phenomenon. This phenomenon similarly occurs, when the packets are audio/visual packets.Consequently, a transmitting rate of the audio/visual packets may fall and image quality and tone quality may be deteriorated.

In a packet shaper, a queue and its control technique thereof may cause delay of the Ack packet arrival.

In view of the above, an object of the present invention is to provide a packet output-controlling device that reduces discard of packets as much as possible so as to enable keeping quality of communications, and art related thereto.

A first aspect of the present invention provides a packet output-controlling device, comprising: a plurality of queues each being operable to store packets; an output-controlling unit operable to control packet-outputting from the plurality of queues; a flow-managing unit operable to store a discard parameter set for each flow; and a queue-managing unit operable to refer to the discard parameter stored by the flow-managing unit, and further operable to insert an inputted packet into one of the plurality of queues unless discard conditions relevant to the inputted packet are satisfied, wherein the discard conditions are determined based on a total queue length of the plurality of queues.

A second aspect of the present invention provides a packet output-controlling device as defined in the first aspect of the present invention, wherein the output-controlling unit comprises a rate-setting control unit operable to set an output rate of a packet outputted from one of the plurality of queues.

In these structures, since the discard conditions are defined based on the total queue length of the plurality of queues, in a case where actual discard of packets has not occurred, connection-oriented packets are transmitted without serious delay. Cases where the functions of the connection-oriented protocol automatically suppress the transmitting rate of packets although actual discard of packets has not occurred in fact can be avoided.

Consequently, deterioration of image quality or tone quality can be reduced also in the audio/visual communications according to the connection-oriented protocol.

A third aspect of the present invention provides a packet output-controlling device as defined in the second aspect of the present invention, wherein the discard conditions are determined further based on a packet length of an inputted packet and a specific discard parameter set to a flow to which the inputted packet belongs, the specific discard parameter being stored by the flow-managing unit.

With this structure, since a difference is given between the priorities of flows, the packets belong to a flow having relative priority are not discarded. Accordingly, the transmission quality of the flow having relative priority is maintained. Consequently, when there are a plurality of flows each having high priority and the grand total of packets belonging to the plurality of flows exceeds a bandwidth of an output interface, all quality of the plurality of flows are not simultaneously deteriorated.

A fourth aspect of the present invention provides a packet output-controlling device as defined in the second aspect of the present invention, wherein each of the plurality of queues is provided for each of a plurality of protocols.

With this structure, priority control of packets can be performed according to a characteristic of each of the plurality of protocols.

A fifth aspect of the present invention provides a packet output-controlling device as defined in the fourth aspect of the present invention, wherein the plurality of protocols include TCP.

With this structure, the packet output-controlling device can support TCP, which is a representative example of connection-oriented protocols.

A sixth aspect of the present invention provides a packet output-controlling device as defined in the second aspect of the present invention, wherein the discard conditions are evaluated utilizing a virtual packet queue indicating the total queue length of the plurality of queues.

In this structure, since the virtual packet queue is utilized, it is not needed to calculate the total queue length at the time of the evaluation of the discard conditions, thereby accelerating processes.

A seventh aspect of the present invention provides a packet output-controlling device as defined in the second aspect of the present invention, wherein the discard conditions are evaluated utilizing a packet counter indicating the total queue length of the plurality of queues.

In this structure, since the packet counter is utilized, it is not needed to calculate the total queue length at the time of the evaluation of the discard conditions, thereby accelerating processes.

An eighth aspect of the present invention provides a packet output-controlling device as defined in the fifth aspect of the present invention, wherein the plurality of queues comprises: a queue provided for TCP; and a queue provided not for TCP, and wherein the rate-setting control unit is operable to output a packet from the queue provided for TCP when the packet exists therein, and further operable to output a packet stored in the queue provided not for TCP when a packet does not exist in the queue provided for TCP.

With this structure, TCP packets, whose transmitting rate tends to automatically suppress by the functions of TCP, can be transmitted prior to UDP packets, thereby keeping quality of audio/visual communications utilizing the TCP packets high.

A ninth aspect of the present invention provides a packet output-controlling device as defined in the second aspect of the present invention, wherein the discard conditions indicate that the inputted packet should be discarded when the sum of a packet length of the inputted packet and the total queue length of the plurality of queues is greater than a length indicated by the discard parameter.

With this structure, by the simple comparison according to the lengths, suitable priority control for every flow can be easily performed.

A tenth aspect of the present invention provides a packet output-controlling device as defined in the second aspect of the present invention, wherein the queue-managing unit is shared by a plurality of flows.

With this structure, flows can be managed briefly and easily.

An eleventh aspect of the present invention provides a packet output-controlling device as defined in the second aspect of the present invention, wherein the flow-managing unit is operable to set the discard parameter based on order of arrival of a flow so that the flow whose transmission has started earlier becomes advantageous.

With this structure, a flow having an earlier transmission start time is advantageously handled. Accordingly, it is possible to prevent quality of an earlier flow from being deteriorated by a later flow, thereby performing reasonable transmission control.

The above, and other objects, features and advantages of the present invention will become apparent from the following description read in conjunction with the accompanying drawings, in which like reference numerals designate the same elements.
Fig. 1 is a block diagram illustrating a packet transmission apparatus (including a packet shaper) in Embodiment 1 of the present invention;
Fig. 2 is a block diagram illustrating a packet output-controlling device (packet shaper) in Embodiment 1 of the present invention;
Fig. 3 is a block diagram illustrating a flow-managing unit in Embodiment 1 of the present invention;
Fig. 4 is a block diagram illustrating a packet output-controlling device (packet shaper) in Embodiment 2 of the present invention;
Fig. 5 is a block diagram illustrating a packet transmission apparatus in Embodiment 3 of the present invention;
Fig. 6 is a chart of a system using a packet transmission apparatus in Embodiment 4 of the present invention;
Fig. 7 is a chart of a system using a packet transmission apparatus in Embodiment 5 of the present invention; and
Fig. 8 is a block diagram illustrating a packet output-controlling device (scheduler) in Embodiment 6 of the present invention.

Referring to the drawings, Embodiments of the present invention will now be described below.

### (Embodiment 1)

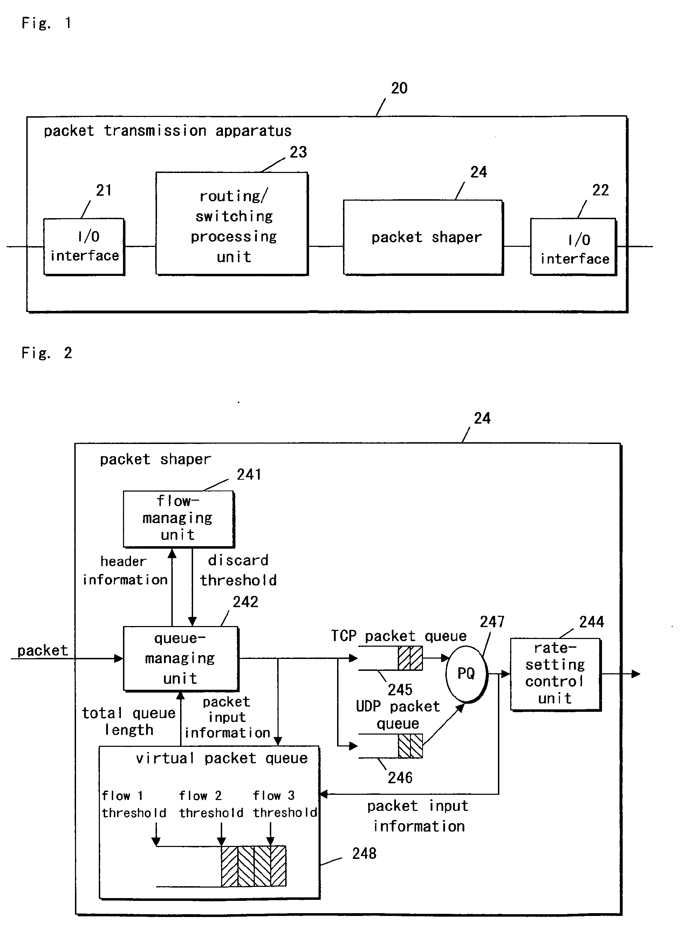

As shown in Fig. 1, a packet transmission apparatus 20 comprises the following elements. Two I/O (input/output) interfaces 21 and 22 input and output packets, respectively. A routing/switching processing unit 23 transfers packets from one side of the I/O interface 21 to the other I/O interface 22.

A packet shaper 24 is interposed between the routing/switching processing unit 23 and the other I/O interface 22. The packet shaper 24 shapes packets outputted from the routing/switching processing unit 23, and outputs the shaped packets to the other I/O interface 122.

Each of the transmission apparatus 20 and the packet shaper 24 can be configured in an arbitrary form. For example, the form may be a combination of a plurality of apparatuses each being mounted in a single case; one or more circuits each being mounted in a single case; all or a part of one or more integrated circuits mounted on a single board. Regardless of a taken form, the packet transmission apparatus 20 and/or the packet shaper 24, which adopt/adopts essence of the present invention, are/is included by the present invention.

Furthermore, as shown in Fig. 2, the packet shaper 24 comprises the following elements. A TCP packet queue 245 has a fixed queue length, and temporarily stores TCP packets. Similarly, a UDP packet queue 246 has a fixed queue length, and temporarily stores UDP packets. These queues 245 and 246 correspond to a plurality of queues each being provided for one of a plurality of protocols differing from each other.

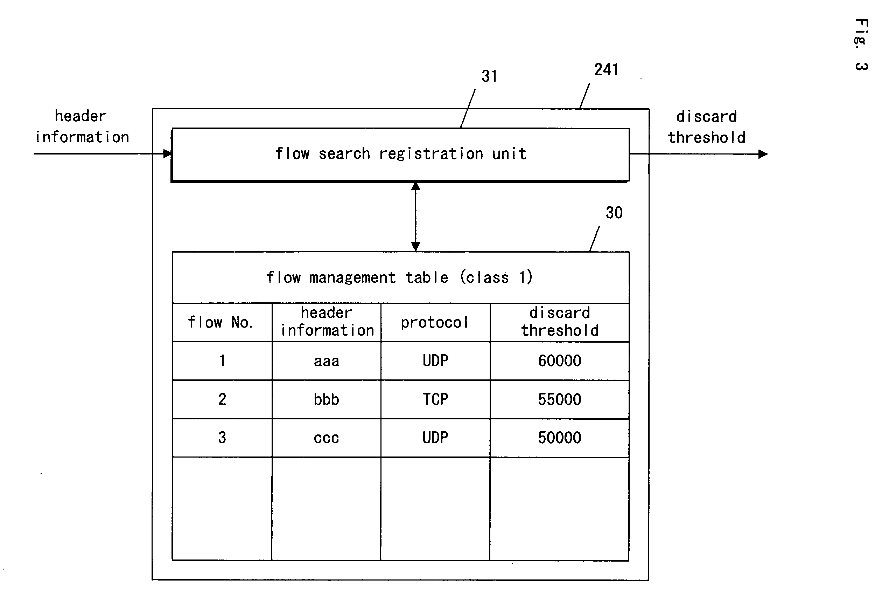

A flow-managing unit 241 stores discard parameters, each of which is set for each flow. As shown in Fig. 3, the flow-managing unit 241 includes a flow control table 30 and a flow search registration unit 31, which retrieves predetermined data from the table 30 and registers predetermined data into the table 30. The table 30 is shared by each flow and holds discard thresholds for each flow.

For example, a flow is defined as a set of packets that have the same a transmitting source IP address, the same transmitting source port number, the same transmission destination IP address, the same transmission destination port number, and the same protocol.

In Embodiment 3, an entry of the table 30 has three fields, that is, a flow number field, a header information field, and a discard threshold field, and controls data for each flow.

The discard threshold corresponds to a value equivalent to the discard parameter. As for the discard parameter, in addition to the above, a coefficient for multiplying with a queue length is available.

As shown in Fig. 2, the flow-managing unit 241 inputs header information, which corresponds to flow information, of a packet inputted from a queue-managing unit 242.

Then, a flow search registration unit 31 searches for a relevant entry in the flow control table 30. When a flow corresponding to the header information is found in the flow control table 30, a discard threshold of the flow corresponding to the header information is outputted to the queue-managing unit 242. Otherwise, after adding a new entry for header information to the flow control table 30, the flow search registration unit 31 outputs a discard threshold thereof to the queue-managing unit 242.

The queue-managing unit 242 inputs a packet, refers to a discard parameter for a flow to which the packet belongs in the flow-managing unit 241. Unless the discard conditions relevant to the packet are satisfied, the queue-managing unit 242 inserts the packet into the TCP packet queue 245 when the packet is a TCP packet, or into the UDP packet queue 246 when the packet is a UDP packet, respectively.

The discard conditions are determined based on a packet length of the packet, a total queue length of the TCP packet queue 245 and the UDP packet queue 246, and the discard parameter of the flow to which the packet belongs. The total queue length is equal to the sum of a queue length of the TCP packet queue 245 and a queue length of the UDP packet queue 246.

According to a PQ (Priority Queuing) method, a scheduler 247 gives priority to a TCP packet over a UDP packet, and outputs a packet inputted there-into. That is, when one or more packets exist in the TCP packet queue 245, the scheduler 247 outputs one packet of the one or more packet from the TCP packet queue 246 to a rate-setting control unit 244. Otherwise, the scheduler 247 outputs one packet of the one or more packet from the UDP packet queue 246 to the rate-setting control unit 244.

The rate-setting control unit 244 sets a transmitting rate of packets outputted from the scheduler 247, and outputs packets inputted from the scheduler 247 according to the set transmitting rate of packets to the exterior thereof.

In Embodiment 1, the queue-managing unit 242 manages the total queue length of the TCP packet queue 245 and the UDP packet queue 246, utilizing a virtual packet queue 248. The virtual packet queue 248 has a function storing a current value of the total queue length. However, a packet is not actually inserted in the virtual packet queue 248.

When the queue-managing unit 242 has inserted a packet in either the TCP packet queue 245 or the UDP packet queue 246, the queue-managing unit 242 adds a packet length of the inserted packet to the current value of the total queue length stored by the virtual packet queue 248.

When the scheduler 247 has taken a packet out from either the TCP packet queue 245 or the UDP packet queue 246 to input to the rate-setting control unit 244, the scheduler 247 subtracts a packet length of the inputted packet from the current value of the total queue length stored by the virtual packet queue 248.

By performing such addition and subtraction, the current value stored by the virtual packet queue 248 always indicates the total queue length of the TCP packet queue 245 and the UDP packet queue 246.

The following discard conditions are defined by the total queue length stored by the virtual packet queue 248 and the discard threshold received from the flow-managing unit 241. According to the following discard conditions, the queue-managing unit 242 judges whether or not the inputted packet should be discarded, and further judges, when not to be discarded, to which the inputted packet should be inserted, the TCP packet queue 245 or the UDP packet queue 246.

That is, when the sum of the present total queue length and the packet length of the inputted packet is greater than the discard threshold, the packet is judged to be discarded. Otherwise, the packet is judged to be inserted into a queue whose protocol corresponds to that of the inputted packet. That is, simple size comparison is performed.

As shown in Fig. 3, the flow-managing unit 241 gives a greater discard threshold to a flow which has begun earlier.

For example, in the case where the transmission of three flows of a flow X, a flow Y and a flow Z have started in this order, the flow-managing unit 241 allots values so that the discard thresholds Tx, Ty and Tz of these flows become as Tx > Ty > Tz.

In an example shown in Fig. 3, first, the flow-1 begins its transmission, secondly, the flow-2 begins its transmission, and thirdly, the flow-3 begins its transmission. Accordingly, the discard thresholds of these become smaller as "60000," "55000" and "50000" in this order.

As for a flow whose packet has not arrived for a predetermined period of time, the flow-managing unit 241 deletes an entry corresponding to the flow from the flow control table 30.

According to this arrangement, the flow that has started earlier is hardly discarded, and packets of the flow that has started earlier are inserted into the queue with priority and outputted from the TCP packet queues 245.

According to the above arrangement, in such a case where the rate of the output interface 22 is greater than that of the input interface 21 and further where congestion has occurred at the output interface 22, packets are not discarded. The reason why is as follows: (a) packets of the flow, which have earlier started, are with priority inserted one of the queues 245 and 246; and (b) the packets of the flow are shaped in accordance with the shaping rate of the output interface 22 to be outputted to the exterior.

Furthermore, inputted packets are classified to be stored by one of the TCP packet queue 245 and the UDP packet queue 246, TCP packets are outputted with priority when the TCP packet queue 245 stores one or more TCP packets. Thereby, fall, which is caused by delay of output of the TCP packet queue 245, of the rate of TCP packet transmission can be suppressed.

Therefore, even when the audio/visual communications according to TCP and the audio/visual communications according to UDP are concurrently performed and congestion has occurred, without making prior reservation, packet discard covering all the flows can be prevented. Thereby, in a case of image transmission, it is possible to prevent all images from being simultaneously deteriorated.

Furthermore, the flow-managing unit 241 changes the discard parameters of a flow whose transmission continues longer than a predetermined period of time so that the flow thereof becomes disadvantageous. And, the flow-managing unit 241 changes discard parameters of a flow whose a cumulative amount of transmission has exceeded a predetermined amount so that the flow thereof becomes disadvantageous.

According to this arrangement, it is possible to prevent a bandwidth from being occupied by a specific flow and fairness in bandwidth usage is ensured.

Next, in Fig. 2, it is assumed that the virtual packet queue 248, the TCP packet queue 245, the UDP packet queue 246, and a scheduler 247 do not exist, but a single queue is provided in instead of these elements 248, 245, and 246. A flow-1 threshold, a flow-2 threshold, and a flow-3 threshold (size relationship is as described above) are set concerning the single queue.

It is assumed that the rate-setting control unit 244 sets a shaping rates of 10Mbps, first, the first flow (6Mbps) of TCP packets begins to flow, and secondly, the second flow (6Mbps) of UDP packets begins to flow. It is further assumed that the first and second flows should be controlled based on order of arrival, that is, priority shall be given to the first flow over the second flow.

### (1) Period when only the first flow flows

Since the summary rate at this time is 6Mbps (< shaping rate: 10Mbps), the single queue does not store one or more packets. That is, the display quality of the first flow is kept fine.

### (2) Period when the first and second flows flow

If the second flow (UDP) begins to flow, the summary rate becomes 12Mbps (> shaping rate: 10Mbps), and a queue length of the single queue increases to near to the flow-2 threshold. When the queue length of the single queue increases, time until an expected Ack packet of a TCP packet has returned becomes longer. Before the length of the single queue reaches to the flow-2 threshold, the congestion-controlling functions of TCP may operate to automatically reduce the rate of the first flow (TCP). Consequently, although priority should be given to the first flow (TCP) in order of arrival, quality of reproduction of AV data configured by the TCP packets belonging to the first flow (TCP) are deteriorated.

Next, a case where the same condition as the above occurs in the packet output-controlling device (packet shaper) according to this Embodiment will now be explained.

### (1) Period when only the first flow flows

This is the same as the above.

### (2) Period when the first and second flows flow

If the second flow (UDP) begins to flow, the summary rate becomes 12Mbps (> shaping rate: 10Mbps), and the queue length of the virtual packet queue 248 increases. However, since the scheduler 247 performs scheduling of the TCP packet queue 245, which priority is given to, and the UDP packet queue 246, only the queue length of the UDP packet 246 increases. In other words, the queue length of the TCP packet queue 245 hardly changes.

Consequently, the congestion-controlling functions of TCP do not operate. Therefore, the quality of reproduction of AV data configured by the TCP packets belonging to the first flow (TCP) are kept fine.

On the contrary, quality of reproduction of AV data configured by the UDP packets belonging to the second flow (UDP) are deteriorated. This is an exact result of rightly performing priority control in order of arrival, and cannot be helped.

### (Embodiment 2)

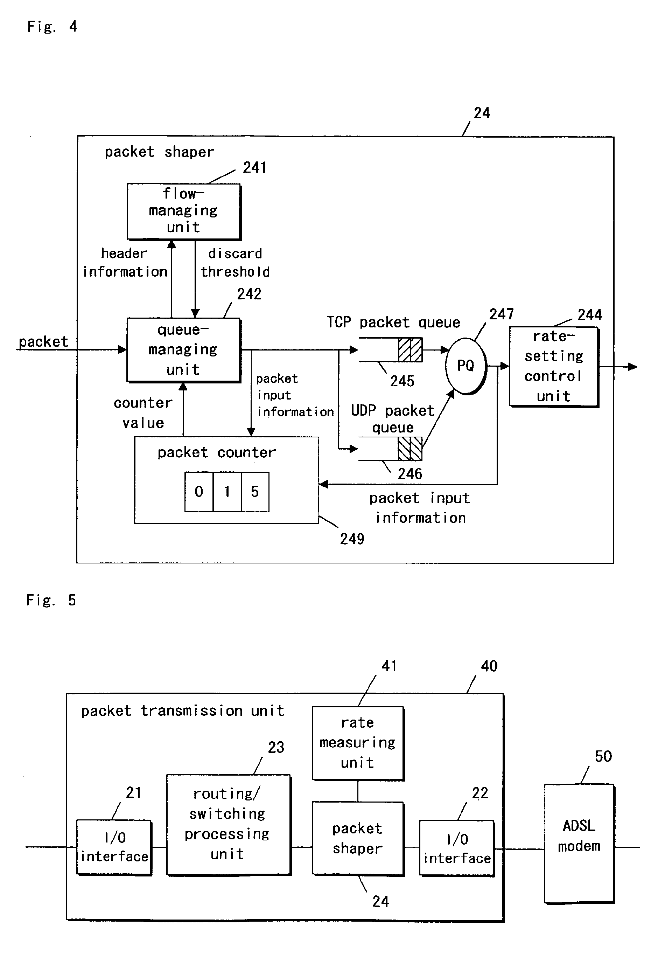

Fig. 4 is a block diagram illustrating a packet shaper in Embodiment 2 of the present invention. In Embodiment 2, a packet counter 249 is provided instead of the virtual packet queue 248 in Embodiment 1.

In Embodiment 2, the packet counter 249 stores a value of the total queue length of the queue length of the TCP packet queue 245 and the UDP packet queue 246. However, handling of the queue length of the packet counter 249 is performed in the unit of the minimum counter value of the packet counter 249. Of course, although the packet counter 249 has a function for storing a current value of the total queue length, no packet is inserted into the packet counter 249.

When the queue-managing unit 242 inserts a packet in either the TCP packet queue 245 or the UDP packet queue 246, the queue-managing unit 242 adds a value of "1" to the current value of the total queue length stored by the packet counter 249.

When the scheduler 247 has taken a packet out from either the TCP packet queue 245 or the UDP packet queue 246 to input to the rate-setting control unit 244, the scheduler 247 subtracts a value of "1" from the current value of the total queue length stored by the packet counter 249.

By performing such addition and subtraction, the current value stored by the packet counter 249 always indicates the total queue length of the TCP packet queue 245 and the UDP packet queue 246. Other points are the same as those of Embodiment 1.

### (Embodiment 3) In the case of ADSL

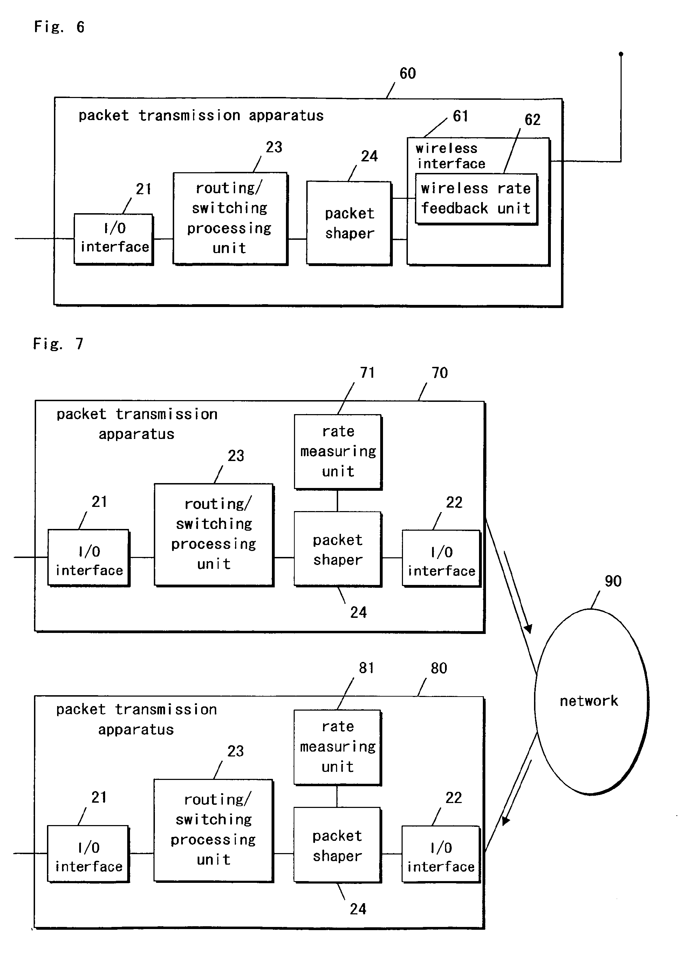

Fig. 5 is a block diagram illustrating a packet transmission apparatus according to Embodiment 3 of the present invention. Embodiment 3 is what contents in Embodiment 1 or 2 is applied to an ADSL. Hereinafter, as for contents, which are the same as those in Embodiment 3, description thereof will be omitted.

As shown in Fig. 5, the packet transmission unit 40 according to Embodiment 3 includes the rate measuring unit 41 for measuring the maximum output rate of the other I/O interface 22.

The rate setting control unit 244 of the packet shaper 24 is adapted so as to dynamically change the rate based on the maximum output rate measured by the rate measuring unit 41. In the case of the ADSL, although an I/O interface at a home is allotted 100Mbps, an up rate of the ADSL is at most 500kbps or so. When a transmission is carried out from the home to the outside thereof, congestion occurs at an ADSL modem 50. Therefore, the rate of the packet shaper 24 may be preferably set to 500kbps.

According to this arrangement, congestion (indiscriminate discard of packets) will not occur near the ADSL modem 50. As described in Embodiment 1, a high priority flow of images within 500kbps is protected in order of arrival. For example, even when three or more image flows of 200kbps exist, the packets of two flows (equivalent to 400kbps), which have started earlier, are protected with priority, and the packets of the image flow of the third flow or later are discarded. Accordingly, it is possible to prevent all image flows from being simultaneously deteriorated.

Herein, the available transmission rate of the ADSL for each user varies depending on a distance from a station to the user's home. Therefore, in Embodiment 3, after the rate measuring unit 41 has been provided and has been installed, a transmission rate available for the home is measured. The measured available transmission rate is registered into the rate setting control unit 244 of the packet shaper 24.

According to this arrangement, while optimizing the transmission rate available for the ADSL which varies depending on the user, it is possible to prevent the packets of each flow from being discarded at congestion. In the case of image transmission, it is possible to prevent the entire images from being simultaneously deteriorated.

Herein, the measuring steps by the rate measuring unit 41 may be, for example, as described below. That is, using a file transmission command of ftp, a file transmission is made to a transmission unit at a station, and the transmission rate is measured based on the transmission time thereof.

### (Embodiment 4) In the case of HGW with wireless interface

Fig. 6 is a block diagram illustrating a packet transmission apparatus according to Embodiment 4 of the present invention. Embodiment 4 is what contents in Embodiment 1 or 2 is applied to a home gateway (HGW) having a wireless interface. Hereinafter, as for contents, which are the same as those in Embodiment 1 or 2, description thereof will be omitted.

As shown in Fig. 6, a packet transmission apparatus 60 according to Embodiment 4 comprises a wireless rate feedback unit 62 as a rate measuring unit that measures the maximum output rate of another I/O interface, which is a wireless interface 61.

The rate setting control unit 244 of the packet shaper 24 is adapted so as to dynamically change the rate based on the maximum output rate, which is measured by the wireless rate feedback unit 62.

In the example shown in Fig. 6, a rate of the cable I/O interface 21 is 100Mbps. In the case of 802.11a, a rate of the wireless interface is 54Mbps. Accordingly, when transmission from a home to the outside thereof is performed, congestion may occur.

Therefore, the rate of the packet shaper 24 should be set to 54Mbps. Thereby, congestion (random discard of packets) near the wireless interface 61 is prevented from occurring.

As described in Embodiment 1, with respect to one or more flows having the high priority within the range of 54Mbps are protected in order of arrival. Accordingly, for example, even when ten or more image flows of 6Mbps flow, the packets of 9 flows, which have started earlier (equivalent to 54Mbps), are protected, and the packets of the tenth or later image flows are discarded. Accordingly, it is possible to prevent all image flows from being simultaneously deteriorated.

Furthermore, in the case of wireless, depending on the location of the partner terminal or obstacles, the available rate changes. For example, according to 802.11a, when a transmission has failed, the transmission rate is lowered by one step, and the data is transmitted again according to the lowered rate.

Therefore, according to Embodiment 4, the wireless rate feedback unit 62 is provided as the rate measuring unit, and a present transmission rate, which dynamically changes, is set in the rate setting control unit 244 of the packet shaper 24.

According to this arrangement, even when the available transmission rate changes like in the case of wireless, while optimizing capacity of a changed transmission path, it is possible to prevent the packets of all flow being discarded at the same time even when congestion has occurred. Accordingly, in the case of image transmission, it is possible to prevent all image flows from being simultaneously deteriorated.

### (Embodiment 5) In the case of VPN router

Fig. 7 is diagram illustrating a system using a packet transmission apparatus according to Embodiment 5 of the present invention. In Embodiment 5, packet transmission apparatuses 70 and 80, which are configured similar to Embodiment 3 or 4, are connected to each other via a network 90. To be more specific, the packet transmission apparatuses 70 and 80 are used as VPN routers.

Rate measuring units 71 and 81 in the packet transmission apparatus 70 and 80 according to Embodiment 5 perform transmission/reception of packets there-between to measure the maximum rate there-between.

In a case of an ordinary VPN, security is guaranteed by coding or the like. However, generally, the transmission rate is not generally guaranteed.

Therefore, according to Embodiment 5, the rate measuring unit 71 is provided to the packet transmission apparatus 70 so as to perform transmission and reception of packets. Thereby, the rate to and from the rate measuring unit 81 of the coupled packet transmission apparatus 80 (VPN router) is measured. And, the measured packet transmission rate at that time is set to the rate setting control units 244 and 244 of the respective packet shapers 24 and 24.

According to this arrangement, while optimizing the transmission rate available in VPN, it is possible to prevent packets of all flow from being discarded at congestion. Accordingly, in a case of image transmission, it is possible to prevent the all image flows from being simultaneously deteriorated.

### (Embodiment 6)

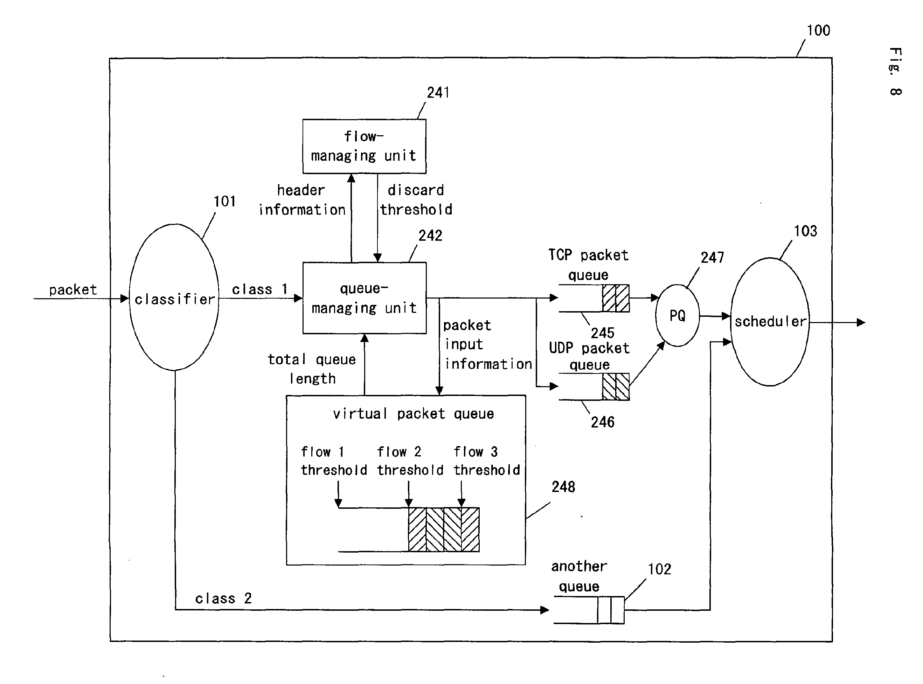

Fig. 8 is a block diagram illustrating the packet output-controlling device (scheduler) in Embodiment 6 of the present invention. Embodiment 6 relates to a scheduler version of Embodiment 1. As shown in Fig. 8, although the packet output-controlling device 100 includes almost all the components of Fig. 2, but does not contain the rate-setting control unit 244.

A classifier 101 is provided prior to the queue-managing unit 242. The classifier 101 classifies inputted packets into class 1 packets (e.g. audio/visual packets) with priority, or class 2 packets (e.g. best effort packets) without priority.

The class 1 packets classified by the classifier 101 are inputted into the queue-managing unit 242. After that, the class 1 packets are processed in the same manner as Embodiment 1 immediately before the rate-setting control unit 244 of Fig. 2, and the class 1 packets are inputted into the output scheduler 103.

Another queue 102 is provided for storing the class 2 packets. The class 2 packet classified by the classifier 101 is inputted into the other queue 102.

The output scheduler 103 is an element added to those of Fig. 2, takes out a packet from the scheduler 247 or the other queue 102 according to a predetermined method, and outputs the outputted packet to the exterior.

Although a schedule method of the output scheduler 103 is arbitrary, the output scheduler 103 normally gives priority to the packet from the scheduler 247 over the packet from the other queue 102, and outputs the stored packet from the output scheduler 103 or the other queue 102 to the exterior.

Similar to the description in Embodiment 1, in the scheduler type packet output-controlling device, when packet-outputting from the TCP packet queue 245 becomes late, the congestion-controlling functions of TCP operate and automatically suppress the transmitting rate of the TCP packets. Thereby, quality of reproduction of AV data configured by the TCP packets are deteriorated.

As clear from the above explanation, the present invention is useful also in the scheduler type packet output-controlling device, and earns the same effects as those of the shaper type packet output-controlling device.

According to the present invention, there are the following effects in the packet transmission apparatus in conditions that a total rate of an input interface exceeds a rate of an output interface.

When there are a plurality of picture flows and the grand total of the packets with high priority exceeds the rate of the output interface, the present invention can prevents quality of all image flows from being simultaneously deteriorated, while prior signaling is not needed, thereby reducing cost of the whole system.

Since queue delay of the TCP packets can be reduced as much as possible, quality of the picture flow according to TCP can also prevent are not deteriorated caused by delay of the TCP queuing.

A plurality of picture services can be provided in ADSL, wireless, or VPN, while utilizing an available communication rate as much as possible.

Performing control based on the total queue length of the plurality of queues, deterioration of image quality or tone quality in the audio/visual communications according to a connection-oriented protocol like TCP can be suppressed.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A packet output-controlling device, comprising:
a plurality of queues (245),(246) each being operable to store packets;
an output-controlling unit (244),(247) operable to control packet-outputting from said plurality of queues (245),(246);
a flow-managing unit (241) operable to store a discard parameter set for each flow; and
a queue-managing unit (242)operable to refer to the discard parameter stored by said flow-managing unit (241), and further operable to insert an inputted packet into one of said plurality of queues (245),(246) unless discard conditions relevant to the inputted packet are satisfied,
wherein the discard conditions are determined based on a total queue length of said plurality of queues (245),(246).

2. The packet output-controlling device as claimed in claim 1, wherein said output-controlling unit (24) comprises
a rate-setting control unit (244) operable to set an output rate of a packet outputted from one of said plurality of queues (245),(246).

3. The packet output-controlling device as claimed in claim 2, wherein the discard conditions are determined further based on a packet length of an inputted packet and a specific discard parameter set to a flow to which the inputted packet belongs, the specific discard parameter being stored by said flow-managing unit (241).

4. The packet output-controlling device as claimed in claim 2, wherein each of said plurality of queues (245),(246) is provided for each of a plurality of protocols.

5. The packet output-controlling device as claimed in claim 4, wherein the plurality of protocols include TCP.

6. The packet output-controlling device as claimed in claim 2, wherein the discard conditions are evaluated utilizing a virtual packet queue (248) indicating the total queue length of said plurality of queues (245),(246).

7. The packet output-controlling device as claimed in claim 2, wherein the discard conditions are evaluated utilizing a packet counter (249) indicating the total queue length of said plurality of queues (245),(246).

8. The packet output-controlling device as claimed in claim 5, wherein said plurality of queues (245),(246) comprises:
a queue provided for TCP (245); and
a queue provided not for TCP (246), and
wherein said rate-setting control unit (244) is operable to output a packet from said queue provided for TCP (245) when the packet exists therein, and further operable to output a packet stored in said queue provided not for TCP (246) when a packet does not exist in said queue provided for TCP (245).

9. The packet output-controlling device as claimed in claim 2, wherein the discard conditions indicate that the inputted packet should be discarded when the sum of a packet length of the inputted packet and the total queue length of said plurality of queues (245),(246) is greater than a length indicated by the discard parameter.

10. The packet output-controlling device as claimed in claim 2, wherein said queue-managing unit (242) is shared by a plurality of flows.

11. The packet output-controlling device as claimed in claim 2, wherein said flow-managing unit (241) is operable to set the discard parameter based on order of arrival of a flow so that the flow whose transmission has started earlier becomes advantageous.

12. The packet output-controlling device as claimed in claim 2, wherein said flow-managing unit (241) is operable to set the discard parameter based on reverse order of arrival of a flow so that the flow whose transmission has started later becomes advantageous.

13. The packet output-controlling device as claimed in claim 2, wherein said flow-managing unit (241) changes the discard parameter of a flow whose transmission has continued longer than a predetermined period of time so that the flow becomes disadvantageous.

14. The packet output-controlling device as claimed in claim 2, wherein said flow-managing unit (241) changes the discard parameter of a flow whose cumulative amount of transmission has exceeded a predetermined amount so that the flow becomes disadvantageous.

15. A packet transmission apparatus, comprising:
a plurality of I/O interfaces (21),(22) each being operable to input and to output packets;
a routing/switching processing unit (23) operable to transfer packets from one I/O interface (21) in said plurality of I/O interfaces (21),(22) to another I/O interface (22) in said plurality of I/O interfaces (21),(22); and
a packet output-controlling device (24) operable to input packets from said routing/switching processing unit (23) to, according to a predetermined rate, output the shaped packets to said other I/O interface (22), said packet output-controlling device being interposed between said routing/switching processing unit (23) and said other I/O interface (22),
wherein said packet output-controlling device (24) comprises:
a plurality of queues (245),(246) each being operable to store packets;
an output-controlling unit (244),(247) operable to control packet-outputting from said plurality of queues (245),(246);
a flow-managing unit (241) operable to store a discard parameter set for each flow; and
a queue-managing unit (242) operable to refer to the discard parameter stored by said flow-managing unit (241), and further operable to insert an inputted packet into one of said plurality of queues (245),(246) unless discard conditions relevant to the inputted packet are satisfied,
wherein the discard conditions are determined based on a total queue length of said plurality of queues (245),(246).

16. The packet transmission apparatus as claimed in claim 15, further comprising:
a rate measuring unit (41) operable to measure a maximum output rate of said other I/O interface (22),
wherein said output-controlling unit (244),(247) of said packet output-controlling device (24) comprises a rate-setting control unit (244) operable to set an output rate of a packet from one of said plurality of queues (245),(246), and
wherein said rate-setting control unit (244) of said packet output-controlling device (24) dynamically changes the output rate of the packet from one of said plurality of queues (22) based on the maximum output rate measured by said rate measuring unit (41).

17. The packet transmission apparatus as claimed in claim 16, wherein said rate measuring unit (41) is operable to perform transmission and reception of packets to and from a packet transmission apparatus of a communication partner and further operable to measure a maximum rate therebetween.

18. The packet output-controlling device as claimed in claim 1, further comprising:
another queue (102) differing from said plurality of queues (245),(246),
wherein said output-controlling unit (244),(247) comprises
a scheduler (103) operable to output a packet outputted from one of said plurality of queues (245),(246) and a packet outputted from said other queue (102) while scheduling to output the packets according to a predetermined method.
